(19) Europäisches Patentamt
European Patent Office
Office européen des brevets

(11) **EP 3 596 489 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **18701476.6**

(22) Anmeldetag: **25.01.2018**

(51) Internationale Patentklassifikation (IPC):
**G01S 7/35** (2006.01)  **G01S 13/34** (2006.01)
**G01S 13/58** (2006.01)

(52) Gemeinsame Patentklassifikation (CPC):
**G01S 7/354; G01S 13/343; G01S 13/345;**
**G01S 13/584;** G01S 7/356

(86) Internationale Anmeldenummer:
**PCT/EP2018/051801**

(87) Internationale Veröffentlichungsnummer:
**WO 2018/166684 (20.09.2018 Gazette 2018/38)**

(54) **VERFAHREN UND RADARVORRICHTUNG ZUM ERMITTELN VON RADIALER RELATIVER BESCHLEUNIGUNG MINDESTENS EINES ZIELES**

METHOD AND RADAR DEVICE FOR DETERMINING RADIAL RELATIVE ACCELERATION OF AT LEAST ONE TARGET

PROCÉDÉ ET DISPOSITIF RADAR POUR LA DÉTERMINATION DE L'ACCÉLÉRATION RADIALE RELATIVE D'AU MOINS UNE CIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2017 DE 102017204496**

(43) Veröffentlichungstag der Anmeldung:
**22.01.2020 Patentblatt 2020/04**

(73) Patentinhaber: **Robert Bosch GmbH**
**70442 Stuttgart (DE)**

(72) Erfinder: **BROSCHE, Thomas**
**70839 Gerlingen (DE)**

(56) Entgegenhaltungen:
**WO-A1-02/054369        DE-A1-102012 220 879**
**DE-A1-102014 226 030**

**Beschreibung**

Die Erfindung betrifft ein Verfahren zum Ermitteln einer Beschleunigung eines Zieles mittels Radarwellen, sowie eine Radarvorrichtung zum Durchführen des Verfahrens.

Stand der Technik

Radarsensoren bzw. Radarvorrichtungen können bei unterschiedlichen Fahrzeugen zur Ortung von Hindernissen oder anderen Fahrzeugen eingesetzt werden. Hierdurch ist es beispielsweise möglich bei Kollisionsgefahr einen Bremsvorgang automatisch auszulösen. Des Weiteren ist es möglich radargestützt einen Fahrer bei dem Halten einer Spur oder eines Abstandes zu vorausfahrenden Fahrzeugen, beispielsweise durch Adaptive Cruise Control, zu assistieren. Insbesondere im Bereich von Kraftfahrzeugen können Radarvorrichtungen auch dazu genutzt werden Objekte in einem toten Winkel zu erkennen und beispielsweise einen Fahrer vor einer Kollision zu warnen.

Bei einer Radarvorrichtung werden modulierte Sendesignale durch mindestens eine Sendevorrichtung versendet. Die Sendesignale werden durch sich im Sendebereich befindliche Objekte reflektiert. Die reflektierten Signale bzw. Empfangssignale werden durch eine Empfangsvorrichtung aufgezeichnet und anschließend ausgewertet. Durch Modulation der Sendesignale, wie beispielsweise bei FMCW (Frequency Modulated Continuous Wave)-Radarvorrichtungen, kann neben der Entfernung auch eine relative Geschwindigkeit von Objekten bestimmt werden. Hierbei entstehen Frequenzunterschiede bzw. Verzögerungen zwischen den Sendesignalen und den Empfangssignalen, die ausgewertet werden. Ein entsprechendes Verfahren zur Bestimmung einer relativen Geschwindigkeit wird beispielsweise in der DE 10 2012 220 879 A1 beschrieben.

Offenbarung der Erfindung

Die der Erfindung zugrunde liegende Aufgabe kann darin gesehen werden, eine Radarvorrichtung und ein Verfahren zu schaffen, das die Bestimmung einer Entfernung zwischen einer Radarvorrichtung und einem Ziel, sowie eine Bestimmung einer relativen Geschwindigkeit des Zieles und darüber hinaus eine Ermittlung einer Beschleunigung des Zieles mittels Radarwellen ermöglicht.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Ermitteln einer Beschleunigung eines Zieles bzw. eines Objektes mittels Radarwellen bereitgestellt. In einem ersten Schritt wird mindestens ein Radar-Sendesignal durch mindestens eine Sendevorrichtung gesendet. Mindestens ein von einem Ziel reflektiertes Radar-Empfangssignal wird empfangen und anschließend an eine Auswerteeinheit übertragen. Die Auswerteeinheit wandelt die Radar-Empfangssignale in digitale Messwerte um und dient zur weiteren Verarbeitung der digitalen Messwerte. In einem weiteren Schritt werden die digitalen Messwerte einer zweidimensionalen Fourier-Transformation unterzogen. Aus einem resultierenden Betragsspektrum bzw. Entfernungs-Geschwindigkeits-Spektrum wird anhand von Scheitelwerten mindestens ein Zielreflex detektiert bzw. ausgewählt. Basierend auf dem Entfernungs-Geschwindigkeits-Spektrum werden mindestens eine Entfernung eines Zieles von der Sendevorrichtung und mindestens eine Radialgeschwindigkeit eines Zieles relativ zu der Sendevorrichtung ermittelt. Anschließend wird mindestens ein Winkel des mindestens einen Zieles relativ zu einer Ausrichtung der Sendevorrichtung und mindestens eine Transversalgeschwindigkeit bestimmt. Basierend auf der Bestimmung bzw. Berechnung der Entfernung, der Radialgeschwindigkeit und des Winkels, werden alle übrigen Zielreflexe ausgeschlossen, abgesehen von dem Zielreflex, für den gerade die Beschleunigung geschätzt werden soll. Für mindestens einen Zielreflex eines tatsächlichen Zieles oder Objektes wird nach einem Durchführen einer inversen Fourier-Transformation aus den verbleibenden erneut transformierten Messwerten zumindest eine radiale Beschleunigung näherungsweise berechnet.

Die Bestimmung der radialen Beschleunigung für mindestens ein Ziel kann somit unter zusätzlicher Berücksichtigung der Transversalgeschwindigkeit bzw. der transversalen Komponenten einer Geschwindigkeit mindestens eines Zieles relativ zu einer Radarvorrichtung erfolgen. Die ermittelte radiale Beschleunigung des Zieles kann somit einem nachfolgenden Tracking, Clustering, Zielklassifikation und dergleichen als zusätzliche Information zur Verfügung gestellt werden. Es kann der Einfluss fehlerhafter Zuordnungen von Reflexpositionen von Messung zu Messung im Tracking auf die Beschleunigungsschätzung vermieden werden. Die zusätzliche Information der relativen radialen Beschleunigung kann beispielsweise automatische Notbremsfunktionen optimieren. Hierbei ist relevant, ob ein Ziel beispielsweise von einem Fahrzeug mit einer Radarvorrichtung weg beschleunigt oder abbremst. Durch ein Bremsen des vorausfahrenden Fahrzeugs kann die Situation kritischer bewertet werden, als bei einem gleichzeitigen Beschleunigen in gleicher Richtung. Durch zusätzliche Messung oder Abschätzung des Winkels des Ziels relativ zu der Sendevorrichtung können Geisterziele zumindest teilweise bei der Verwertung der digitalen Messdaten ausgeschlossen werden. Die hierfür erforderlichen Messungen können auch in Form von separaten Messsequenzen oder durch zusätzliche Messvorrichtungen durchgeführt werden. Bevorzugterweise erfolgt die Detektion bzw. die Selektion mindestens eines Scheitelwertes eines Zielreflexes im Entfernungs-Geschwindigkeits-Spektrum abhängig von einer Anwendung des Verfahrens. Wird das Verfahren beispielsweise für ein Bremsassistenzsystem verwendet, so sind insbesondere die vorausfahrenden Ziele relevant. Hingegen sind bei der Verwendung des Verfahrens bei einem adaptiven Cruise Control auch seitlich positionierte Objekte oder Fahrzeuge relevant. Die Selektion der Scheitelwerte ist hierbei nicht auf die genannten zur Verdeutlichung hervorgebrachten Beispiele beschränkt.

Gemäß einem Ausführungsbeispiel kann das mindestens eine reflektierte Radar-Empfangssignal durch die mindestens eine Sendevorrichtung und/oder durch eine zusätzliche Empfangsvorrichtung empfangen werden. Hierdurch kann eine Sendevorrichtung sowohl Radarwellen in Form von Radar-Sendesignalen senden als auch reflektierte Radarwellen in Form von Radar-Empfangssignalen empfangen. Hierdurch kann eine Sendevorrichtung kompakter ausgeführt sein.

Gemäß einem weiteren Ausführungsbeispiel wird der mindestens eine Zielreflex durch Maskieren bzw. durch Fensterung von weiteren Zielreflexen getrennt. Hierbei können in dem Entfernungs-Geschwindigkeits-Spektrum die zum jeweiligen Zielreflex, für den aktuell die Beschleunigung geschätzt wird, nicht zugehörigen Scheitelwerte bzw. Peaks und Werte auf 0 gesetzt werden. Auf diese Art können zudem nicht eindeutige bzw. fehlerhafte Störreflexe bzw. Geisterziele herausgefiltert werden. Die weitere Verarbeitung der digitalen Messwerte ist somit auf digitale Messwerte von tatsächlichen Zielen beschränkt.

Gemäß einem weiteren Ausführungsbeispiel wird der mindestens eine Zielreflex durch Schätzung der Position und komplexwertigen Amplitude mindestens eines Scheitelwertes rekonstruiert. Hierdurch kann ein Scheitelwert beispielsweise mit Hilfe von einem Interpolationsverfahren angenähert und das dem Scheitelwert zugehörige Signal, z.B. durch eine Funktion, nachgebildet werden. Somit kann die weitere Verarbeitung der digitalen Messwerte vereinfacht werden und auf Basis der nachgebildeten Funktion durchgeführt werden.

Gemäß einem weiteren Ausführungsbeispiel wird die mindestens eine Entfernung mindestens eines realen Zieles von der Sendevorrichtung durch eine Laufzeitmessung des mindestens einen Radar-Sendesignals bestimmt. Hierbei kann das Verfahren beispielsweise zwischengeschobene Messsequenzen aufweisen, die lediglich der Entfernungsmessung dienen. Hierdurch kann die Entfernung zu einem Ziel vereinfacht ermittelt werden. Dies kann sowohl mit der Radarvorrichtung als auch mit zusätzlichen Entfernungsmessern erfolgen.

Gemäß einem weiteren Ausführungsbeispiel wird die mindestens eine Geschwindigkeit mindestens eines Zieles relativ zu der Sendevorrichtung durch Berechnung aus mindestens zwei reflektierten Radar-Empfangssignalen bestimmt. Hierbei kann eine zusätzliche Messsequenz dazu genutzt werden anhand von mehreren chronologischen Entfernungsmessungen eine relative Geschwindigkeit in radialer und transversaler Richtung zu ermitteln. Alternativ kann eine zusätzliche Radarvorrichtung, Videomessvorrichung oder Lasermessvorrichtung hierfür hilfsweise verwendet werden.

Nach einem weiteren Aspekt der Erfindung wird eine Radarvorrichtung mit mindestens einer Sendevorrichtung zum Senden von mindestens einem Radar-Sendesignal und mit mindestens einer Empfangsvorrichtung zum Empfangen von mindestens einem reflektierten Radar-Empfangssignal mit einer Auswerteeinheit zum Umwandeln der Radar-Empfangssignale in digitale Messwerte und zum Verarbeiten der digitalen Messwerte. Hierbei werden basierend auf einer Bestimmung bzw. Berechnung durch die Auswerteeinheit einer Entfernung der Sendevorrichtung von einem Ziel, einer Radialgeschwindigkeit eines Zieles relativ zu der Sendevorrichtung und einem Winkel zwischen einer Ausrichtung der Sendevorrichtung und dem Ziel, alle Zielreflexe, abgesehen von dem Zielreflex, für den aktuell die Beschleunigung geschätzt wird, ausgeschlossen. Des Weiteren kann die Auswerteeinheit basierend auf den verarbeiteten Daten für Zielreflexe realer Ziele nach einem Durchführen einer inversen Fourier-Transformation aus den transformierten Messwerten radiale Beschleunigungen näherungsweise berechnen. Hierdurch kann die Radarvorrichtung insbesondere für verbesserte Assistenzfunktionen im Bereich von Kraftfahrzeugen verwendet werden. Eine derartige Radarvorrichtung kann auch als eine LIDAR (Light Detecting And Ranging)-Vorrichtung oder auf Basis von Ultraschall realisiert werden.

Gemäß einem Ausführungsbeispiel sind die digitalen Messwerte durch die Auswerteeinheit hardwarebasiert und/oder softwarebasiert weiterverarbeitbar. Die Auswerteeinheit kann hierbei je nach Anwendung in Form einer Software, beispielsweise innerhalb eines digitalen Signalprozessors oder Microcontrollers, und/oder in Form von Hardware ausgeführt sein. Hardwarebasiert kann eine Auswerteeinheit beispielsweise als ein integrierte Schaltung oder als ein Field-Programmable Gate Array ausgeführt sein.

Im Folgenden werden anhand von stark vereinfachten schematischen Darstellungen bevorzugte Ausführungsbeispiele der Erfindung näher erläutert. Hierbei zeigen

Fig. 1      eine schematische Darstellung einer Radarvorrichtung gemäß einem ersten Ausführungsbeispiel,

Fig. 2      einen Ablauf eines Verfahrens gemäß einem ersten Ausführungsbeispiel,

Fig. 3      einen Ablauf zum Auswählen von Scheitelwerten von Zielen

Fig. 4      ein schematisches Entfernungs-Geschwindigkeits-Spektrum des Verfahrens gemäß dem ersten Ausführungsbeispiel, welches dem Ausschnitt A in Figur 3 entspricht,

Fig. 5a-b   eine Übersicht von einigen relevanten Vektoren und Variablen und

Fig. 6        ein schematisches Diagramm zum Abschätzen einer radialen Beschleunigung als einen Schritt des Verfahrens gemäß dem ersten Ausführungsbeispiel.

In den Figuren weisen dieselben konstruktiven Elemente jeweils dieselben Bezugsziffern auf.

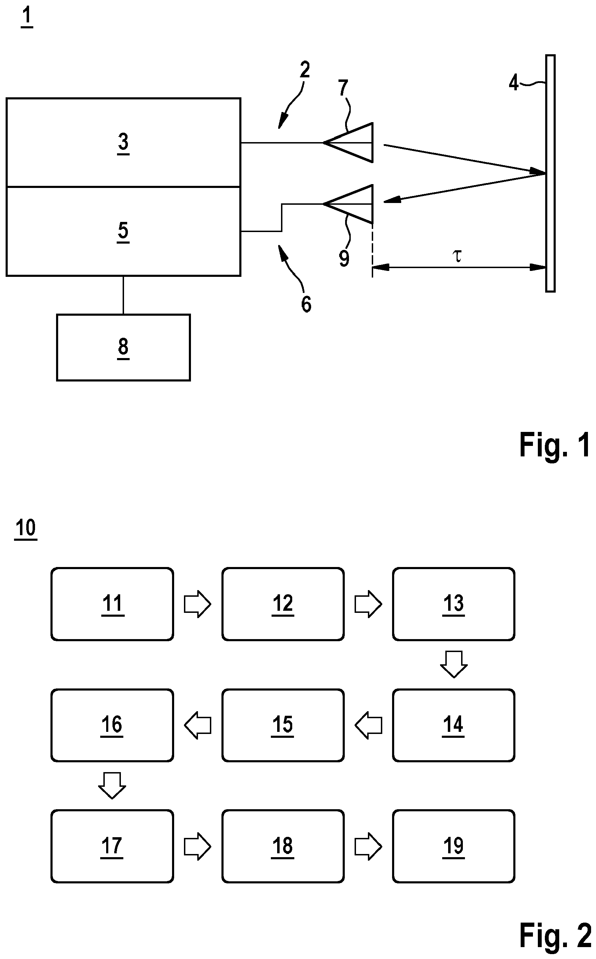

Figur 1 zeigt eine Radarvorrichtung 1 gemäß einem ersten Ausführungsbeispiel. Über eine Sendevorrichtung 2 wird eine Anzahl an Radarwellen als rampenförmig frequenzmodulierte Radar-Sendesignale abgestrahlt. Die Sendevorrichtung 2 besteht aus einem Sender 3 und einer Sendeantenne 7. Der Sender 3 steuert die Sendeantenne 7 an. Gemäß dem Ausführungsbeispiel wird eine Fast-Chirp-Modulation verwendet. Während eines nicht dargestellten Messintervalls $T_{mess}$ werden M kurze frequenzmodulierte rampenförmige Radar-Sendesignale gesendet. Die Radar-Sendesignale weisen hierbei einen zeitlichen Abstand $T_{rr}$ zueinander auf und haben eine jeweilige Dauer von $T_{mod}$. Der zeitliche Abstand $T_{rr}$ der Rampen zueinander liegt in einer gleichen Größenordnung wie die Dauer einer Rampe bzw. eines rampenförmig frequenzmodulierten Radar-Sendesignals. Dieser zeitliche Abstand $T_{rr}$ kann etwas größer oder auch geringer als die Rampendauer sein. Die Rampen können auch zeitlich nicht äquidistant angeordnet sein. Die Radarwellen bzw. die Radar-Sendesignale werden an einem Ziel 4 reflektiert. Beispielsweise können in einem Detektionsfeld der Radarvorrichtung 1 vorhandenen Ziele 4 Kraftfahrzeuge, Personen, Pfosten, Leitplanken, Übergänge zwischen unterschiedlichen Materialien und dergleichen sein. Nach einem Reflektionsvorgang werden aus den Radar-Sendesignalen Radar-Empfangssignale. Die Radar-Empfangssignale können anschließend von einer Empfangsvorrichtung 6 empfangen werden. Die Radarempfangsvorrichtung 6 besteht hierbei aus einem Empfängermodul 5 und einer Empfangsantenne 9. Das Empfängermodul 5 verarbeitet die von der Empfangsantenne 9 empfangene reflektierte Radarwellen bzw. Signale. Die Radar-Empfangssignale erreichen die Empfangsvorrichtung 6 erst nach einer Verzögerungszeit $\tau$. Die von der Empfangsvorrichtung 6 gemessenen und anschließend vorverarbeiteten (z.B. demodulierten, verstärkten, gefilterten) Signale werden an eine Auswerteeinheit 8 übermittelt, wo die Radar-Empfangssignale weiterverarbeitet werden können. Die Pfeile verdeutlichen den Verlauf der Radarwellen von der Sendevorrichtung 2 über eine Reflektion an dem Ziel 4 zu der Empfangsvorrichtung 6.

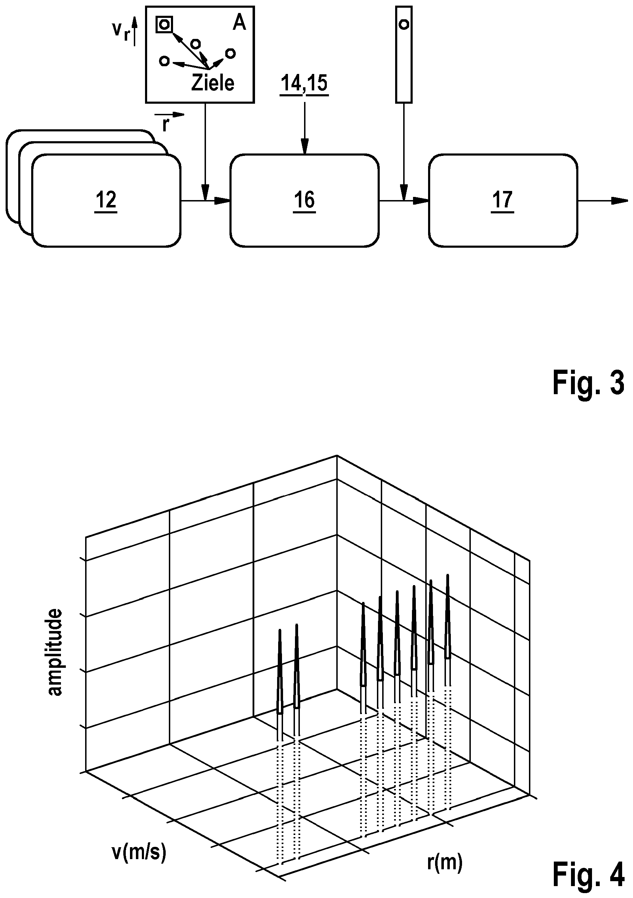

In Figur 2 ist ein vereinfachter Ablauf eines Verfahrens 10 gemäß einem ersten Ausführungsbeispiel dargestellt. Nach dem Empfangen der Radar-Empfangssignale werden die Radar-Empfangssignale an die Auswerteeinheit 8 übermittelt. Neben der Sendevorrichtung 2 und der Empfangsvorrichtung 6 wird das Verfahren 10 größtenteils durch die Auswerteeinheit 8 durchgeführt. In der Auswerteeinheit 8 werden die empfangenen reflektierten Radar-Empfangssignale in digitale Messwerte umgewandelt 11. Die Messwerte werden im nächsten Schritt 12 durch eine zweidimensionale diskrete Fourier-Transformation in ein Entfernungs-Geschwindigkeits-Spektrum transformiert. Hierzu wird u.a. die Fourier-Transformation entlang korrespondierender Werte der Einzelrampen in Doppler- bzw. Geschwindigkeits-Richtung durchgeführt. In Figur 4 ist beispielhaft ein Entfernungs-Geschwindigkeits-Spektrum dargestellt. In einem weiteren Schritt 13 werden die Scheitelwerte im Entfernungs-Geschwindigkeits-Spektrum detektiert. Die Scheitelwerte korrespondieren hierbei mit tatsächlichen bzw. realen Zielen 4 oder stellen Geisterziele bzw. Störungen dar, die keinem realen Ziel bzw. Objekt zugeordnet werden können. Ein physikalisches Ziel 4 kann auch mehrere Einzel-Zielreflexe bzw. Scheitelwerte aufweisen. Anschließend wird in einem weiteren Schritt 14 mindestens eine Entfernung r der Empfangs- (6) und Sendevorrichtung 2 und mindestens eine relative Radialgeschwindigkeit zu mindestens einem Ziel 4 ermittelt. Hierbei werden auch Transversalgeschwindigkeiten $v_q$ des Ziels 4 relativ zu der Empfangs- (6) und Sendevorrichtung 2 ermittelt. Anschließend wird mindestens ein Winkel $\alpha$ eines Ziels 4 relativ zu einer Ausrichtung der Empfangs- (6) und Sendevorrichtung 2 bestimmt 15. Besitzt die Radarvorrichtung 1 eine Antenne mit mehreren Sende-2 und/oder Empfangskanälen 6, dann kann eine Winkelschätzung in Azimut- bzw. Elevationsrichtung der Zielreflexe 4 und damit eine Bestimmung der 3D-Zielpositionen im Raum durchgeführt werden. Dazu werden die ersten Signalverarbeitungsschritte 11, 12 vor der Detektion 13 für jede Kombination aus Sende- und Empfangs-Kanal separat ausgeführt. Anhand der zusammengefassten Spektren der einzelnen Kanäle werden anschließend die Detektion 13, die Parameterschätzung 14 und die Winkelschätzung 15 durchgeführt. Basierend auf der Schätzung der Entfernung 14, der Radialgeschwindigkeit 14 und der Winkel 15, können Ziele ausgeschlossen werden und die Zielreflexe tatsächlicher Ziele 4 für die Beschleunigungsschätzung ausgewählt bzw. separiert werden 16. Im nächsten Schritt 17 wird das separierte Messsignal für den jeweils ausgewählten Zielreflex-bzw. Scheitelwert einer inversen Fourier-Transformation unterzogen und anschließend aus den transformierten Messwerten die radiale Beschleunigung $a_r$ näherungsweise berechnet 18. Die beschriebene Separierung und Berechnung der Beschleunigung kann in gleicher Weise für weitere Zielreflexe wiederholt werden. In einem letzten Schritt 19 können die näherungsweise berechneten Werte für radiale Beschleunigungen $a_r$ der ausgewählten Zielreflexe beispielsweise für ein nachfolgendes Tracking, ein Clustern, eine Zielklassifikation und dergleichen genutzt werden. Alternativ können die ermittelten Daten an eine Rechnereinheit übermittelt werden, damit diese in entsprechende Assistenzfunktionen einbezogen werden können.

In Figur 3 ist ein Ablauf zum Auswählen von Scheitelwerten tatsächlicher bzw. relevanter Ziele gemäß dem Schritt 16 verdeutlicht. Hierbei werden die in Figur 2 dargestellten Schritte 12, 16 und 17 hervorgehoben. Nach zweidimensionalen diskreten Fourier-Transformationen in mehreren Empfangskanälen 12 entsteht aus den digitalen Messwerten ein Entfernungs-Geschwindigkeits-Spektrum für jeden Empfangskanal, das in Figur 4 vergrößert gezeigt ist. Im nächsten Schritt wird unter Zuhilfenahme von abgeschätzten bzw. bestimmten Werten für eine Entfernung r und/oder eine Radialgeschwindigkeit $v_r$ und/oder Winkel $\alpha$ mindestens ein Zielreflex ausgewählt und separiert 16. Man erhält den Signalvektor $X$ bzw. nach inverser DFT (Werte von Rampe-zu-Rampe) in Doppler-Richtung den Signalvektor $x = \text{IDFT}(X)$. Basierend auf diesem ausgewählten Zielreflex erfolgen die anschließenden Schritte 17 bis 19.

Im Folgenden wird eine mögliche näherungsweise Berechnung einer radialen Beschleunigung $a_r$ detaillierter beschrieben. Eine über die Zeit t variierende Phasendifferenz $\varphi_{a,m}$ zwischen den Radar-Sendesignalen und den Radar-Empfangssignalen zu den Zeitpunkten der jeweiligen m-ten Rampe in Abhängigkeit von der radialen Beschleunigung $a_r$ kann durch ein folgendes vereinfachtes Modell abgebildet werden:

$$\varphi_{a,m} \approx - \frac{2\pi \cdot f_c \cdot T_{rr}^2}{c} \cdot a_r \cdot \left(m - \frac{M-1}{2}\right)^2$$

mit einer mittleren Rampenfrequenz $f_c$, einer Rampennummer m, einer gesamten Rampenanzahl M innerhalb des Messintervalls $T_{mess}$ und der Lichtgeschwindigkeit c. Während des Messintervalls $T_{mess}$ werden M kurze frequenzmodulierte rampenförmige Radar-Sendesignale gesendet. Die Radar-Sendesignale weisen hierbei einen zeitlichen Abstand $T_{rr}$ zueinander auf.

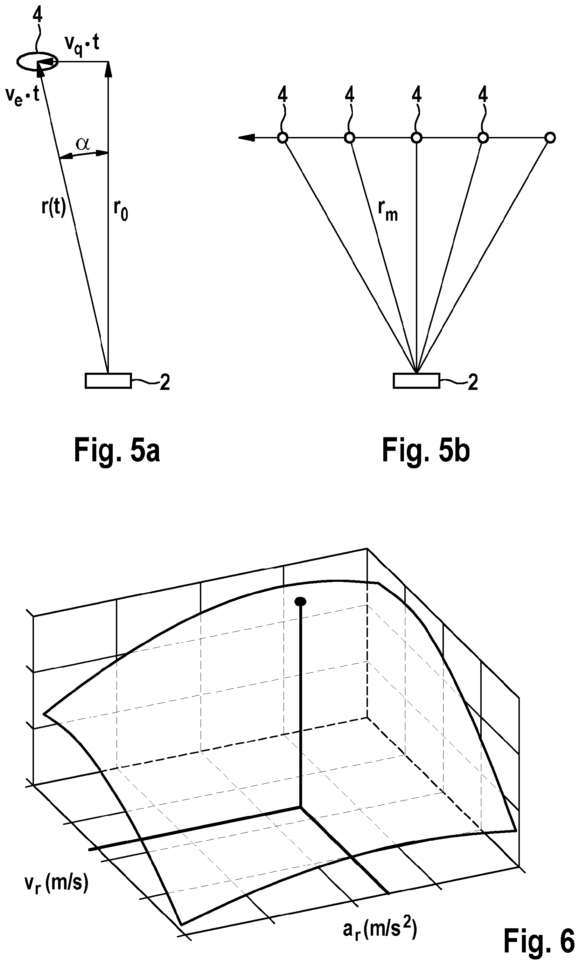

Die gleichzeitige Schätzung von $a_r$ und $v_q$ anhand eines Empfangskanals führt zu Mehrdeutigkeiten. Die transversale Geschwindigkeitskomponente $v_q$ muss somit vorab bekannt sein bzw. auf andere Weise wie beispielsweise durch Tracking-Verfahren geschätzt werden. In den Figuren 5a und 5b sind hierzu die vektoriellen Relationen veranschaulicht. Ein Ziel 4 weist hierbei einen Abstand r(t) zum Zeitpunkt t bzw. $r_m$ während des m-ten rampenförmigen Radar-Sendesignals von der Sendevorrichtung 2 auf. Der kürzeste Abstand $r_0$ zwischen dem Ziel 4 und der Sendevorrichtung 2 ist, wenn der Winkel $\alpha = 0°$ beträgt. Der Winkel $\alpha$ kann dabei als ein Azimut- oder Elevationswinkel bzw. als eine Linearkombination von beiden Winkeln betrachtet werden.

$$r_m(v_q) = r(v_q) = \sqrt{r_0^2 + \left(v_q \cdot \left(m - \frac{M-1}{2}\right) \cdot T_{rr}\right)^2}$$

Der zeitliche Mittelwert für eine Entfernungsänderung $\overline{\Delta r}$ kann anhand der folgenden mathematischen Formel bestimmt werden.

$$\Delta \bar{r} = r_0 \cdot \left( \frac{\sqrt{1 + \left(\frac{v_q T_{mess}}{2r_0}\right)^2}}{2} + \frac{1}{2\frac{v_q T_{mess}}{2r_0}} \cdot ln\left(\frac{v_q T_{mess}}{2r_0} + \sqrt{1 + \left(\frac{v_q T_{mess}}{2r_0}\right)^2}\right) - 1\right)$$

Dies gilt jedoch nur bei transversalen Geschwindigkeiten von $v_q \neq 0$ $m/s$. Bei einer Transversalgeschwindigkeit von $v_q = 0$ $m/s$ ergibt sich für $\overline{\Delta r} = 0m$.

Für die Schätzung der radialen Beschleunigung werden nun die theoretischen Phasenlagen $\varphi_{a,m}$ der Radar-Empfangssignale zu den Zeitpunkten der jeweiligen Rampe m in Abhängigkeit von der radialen Beschleunigung $a_r$ und der für den aktuellen Reflex separierte und invers in Doppler-Richtung (Werte von Rampe-zu-Rampe) Fourier-transformierte Messsignalvektor x=IFFT(X) genutzt um das Betragsquadrat $|\mathbf{Y}(a_r)|^2$ zu berechnen, welches dann maximiert wird

$$\hat{a}_r = \arg \max_{a_r, v_r}\{|\mathbf{Y}(a_r)|^2\} - \frac{-2v_q^2}{\sqrt{(2r_0)^2 + (v_q T_{mess})^2}}$$

mit $\mathbf{Y}(a_r)$ als Resultat der normierten Fourier-Transformation bei äquidistanten Rampenabständen $T_{rr}$.

$$Y(a_r) = \frac{FFT\{x \circ exp[-j\,\boldsymbol{\varphi}_a(a_r)]\}}{\sum_m |x|}$$

In Figur 6 ist zur Verdeutlichung das Betragsquadrat $|Y(a_r)|^2$ dargestellt. Die Position des Maximums des Betragsquadrates $|Y(a_r)|^2$ entspricht hierbei den Schätzwerten der radialen Beschleunigung $\hat{a}_r$ und der radialen Geschwindigkeit $\hat{v}_r$ eines Zieles 4.

Bei nicht äquidistanten Rampenabständen wird die FFT durch einen Bartlett-Schätzer ersetzt bzw. die nicht äquidistanten Zeitpunkte der Rampen verwendet.

Um die Genauigkeit zu erhöhen, kann zusätzlich auch die transversale Geschwindigkeit $v_q$ berücksichtigt werden. Dann beträgt $Y(a_r)$

$$Y(a_r) = \frac{FFT\left\{x \circ exp[-j\,\boldsymbol{\varphi}_a(a_r)] \circ exp\left[-j\,\Delta\boldsymbol{\varphi}_{v_q}\right]\right\}}{\sum_m |x|}$$

mit dem aus den Phasenlagen $\varphi_{a,m}$ gebildeten Vektor

$$\boldsymbol{\varphi}_a = \{\varphi_{a,m}\}$$

und dem Vektor

$$\Delta\boldsymbol{\varphi}_{v_q} = 2\big[r_m\left(v_q\right) - \Delta\bar{r} - r_0\big] \cdot k$$

sowie

$$v_q = \sqrt{v_{q,a}^2 + v_{q,e}^2}$$

Hierbei ist $r_m$ die Zielentfernung zum Zeitschritt m = 0, 1, 2 ... M - 1; k die Wellenzahl; $\bar{r}$ der mittlere Zielabstand; $v_{q,a}$ die transversale Geschwindigkeit in Azimut-Richtung und $v_{q,e}$ in Elevationsrichtung.

Anhand der aufgezeigten mathematischen Zusammenhänge kann die radiale Beschleunigung $a_r$ näherungsweise berechnet bzw. geschätzt werden.

**Patentansprüche**

1. Verfahren (10) zum Ermitteln einer Beschleunigung eines Zieles (4) mittels Radarwellen mit den Schritten:

    - Senden von rampenförmigen frequenzmodulierten Radar-Sendesignalen durch mindestens eine Sendevorrichtung (2) und Empfangen von mindestens einem von mindestens einem Ziel reflektierten Radar-Empfangssignal während eines Messintervalls ($T_{mess}$),
    - Übertragen des Radar-Empfangssignals an eine Auswerteeinheit (8) und Umwandeln (11) der mindestens einen empfangenen Radar-Empfangssignals in digitale Messwerte,
    - Durchführen einer 2-dimensionalen Fourier-Transformation (12) aus einem Betragsspektrum der digitalen Messwerte,
    - Detektion (13) von mindestens einem Zielreflex eines Zieles (4) anhand von Scheitelwerten in einem Betragsspektrum,
    - Bestimmen (14) von mindestens einer Entfernung (r) eines Zieles (4) von der Sendevorrichtung (2), mindestens einer Radialgeschwindigkeit $v_r$ und mindestens einer Transversalgeschwindigkeit ($v_q$) eines Zieles (4) relativ zu der Sendevorrichtung (2),
    - Bestimmen von mindestens einem Winkel ($\alpha$, 15) des mindestens einen Zieles (4) relativ zu einer Ausrichtung der Sendevorrichtung (2), wobei basierend auf der Bestimmung der Entfernung (r, 14), der relativen Radialge-

schwindigkeit ($v_r$) und des Winkels ($\alpha$, 15), bis auf den jeweiligen Zielreflex eines Zieles (4), für den die Beschleunigung geschätzt werden soll, alle weiteren Zielreflexe und Störungen unterdrückt werden und für diesen Zielreflex eines physikalischen Zieles (4) nach einem Durchführen einer inversen Fourier-Transformation (17) aus den transformierten Messwerten radiale Beschleunigungen ($a_r$) näherungsweise berechnet werden (18).

2. Verfahren nach Anspruch 1, wobei die reflektierten Radar-Empfangssignale durch die mindestens eine Sendevorrichtung (2) gesendet und/oder durch eine zusätzliche Empfangsvorrichtung (6) empfangen werden.

3. Verfahren nach einem der Ansprüche 1 bis 2, wobei der Zielreflex, für den jeweils die Beschleunigung geschätzt wird, durch Maskieren von Scheitelwerten aller weiteren Zielreflexe und Störsignale separiert wird.

4. Verfahren nach einem der Ansprüche 1 bis 3, wobei der Zielreflex, für den jeweils die Beschleunigung geschätzt wird, durch Rekonstruktion bzw. Bestimmung mindestens eines Scheitelwertes approximiert wird (13).

5. Verfahren nach einem der Ansprüche 1 bis 4, wobei die mindestens eine Entfernung (r) mindestens eines realen Zieles (4) von der Sendevorrichtung (2) durch eine Laufzeitmessung des mindestens einen Radar-Sendesignals und mindestens eine relative Radialgeschwindigkeit ($v_r$) zu mindestens einem Ziel (4) ermittelt wird.

6. Verfahren nach einem der Ansprüche 1 bis 5, wobei die mindestens eine relative Transversalgeschwindigkeit ($v_q$) mindestens eines realen Zieles (4) relativ zu der Sendevorrichtung (2) durch Berechnung aus mindestens zwei reflektierten Radar-Empfangssignalen bestimmt wird.

7. Radarvorrichtung (1) zum Durchführen des Verfahrens (10) nach einem der vorhergehenden Ansprüche mit mindestens einer Sendevorrichtung (2) zum Senden von Radar-Sendesignalen und mit mindestens einer Empfangsvorrichtung (6) zum Empfangen von reflektierten Radar-Empfangssignalen und mit einer Auswerteeinheit (8) zum Umwandeln (11) der Radar-Empfangssignale in digitale Messwerte (x) und zum Verarbeiten der digitalen Messwerte (12, 13, 14, 15, 16, 17, 18).

8. Radarvorrichtung nach Anspruch 7, wobei die digitalen Messwerte (x) durch die Auswerteeinheit (8) hardwarebasiert und/oder softwarebasiert weiterverarbeitbar sind.


**Claims**

1. Method (10) for ascertaining an acceleration of a target (4) by means of radar waves, comprising the following steps:

   - transmitting ramped frequency-modulated radar transmission signals by means of at least one transmitting device (2) and receiving at least one radar reception signal reflected from at least one target during a measurement interval ($T_{meas}$),
   - transferring the radar reception signal to an evaluation unit (8) and converting (11) the at least one received radar reception signal into digital measurement values,
   - carrying out a two-dimensional Fourier transformation (12) from an absolute value spectrum of the digital measurement values,
   - detecting (13) at least one target reflection of a target (4) on the basis of peak values in an absolute value spectrum,
   - determining (14) at least one distance (r) between a target (4) and the transmitting device (2), at least one radial velocity $v_r$ and at least one transverse velocity ($v_q$) of a target (4) relative to the transmitting device (2),
   - determining at least one angle ($\alpha$, 15) of the at least one target (4) relative to an orientation of the transmitting device (2),

   wherein
   on the basis of the determination of the distance (r, 14), the relative radial velocity ($v_r$) and the angle($\alpha$, 15), apart from the respective target reflection of a target (4) for which the acceleration is intended to be estimated, all further target reflections and disturbances are suppressed and for said target reflection of a physical target (4), after carrying out an inverse Fourier transformation (17), radial accelerations ($a_r$) are approximately calculated (18) from the transformed measurement values.

2. Method according to Claim 1, wherein the reflected radar reception signals are transmitted by the at least one transmitting device (2) and/or received by an additional receiving device (6).

3. Method according to either of Claims 1 and 2, wherein the target reflection for which the acceleration is estimated in each case is separated by masking peak values of all further target reflections and disturbance signals.

4. Method according to any of Claims 1 to 3, wherein the target reflection for which the acceleration is estimated in each case is approximated (13) by reconstruction or determination of at least one peak value.

5. Method according to any of Claims 1 to 4, wherein the at least one distance (r) between at least one real target (4) and the transmitting device (2) is ascertained by means of a time-of-flight measurement of the at least one radar transmission signal and at least one relative radial velocity ($v_r$) with respect to at least one target (4).

6. Method according to any of Claims 1 to 5, wherein the at least one relative transverse velocity ($v_q$) of at least one real target (4) relative to the transmitting device (2) is determined by calculation from at least two reflected radar reception signals.

7. Radar device (1) for carrying out the method (10 according to any of the preceding claims, comprising at least one transmitting device (2) for transmitting radar transmission signals and comprising at least one receiving device (6) for receiving reflected radar reception signals and comprising an evaluation unit (8) for converting (11) the radar reception signals into digital measurement values (x) and for processing the digital measurement values (12, 13, 14, 15, 16, 17, 18).

8. Radar device according to Claim 7, wherein the digital measurement values (x) are able to be processed further by the evaluation unit (8) in a hardware-based manner and/or in a software-based manner.

**Revendications**

1. Procédé (10) de détermination d'une accélération d'une cible (4) au moyen d'ondes radar, ledit procédé comprenant les étapes suivantes :

   - émettre des signaux d'émission radar en forme de rampe, modulés en fréquence, par le biais d'au moins un dispositif d'émission (2) et recevoir au moins un signal de réception radar, réfléchi par au moins une cible, pendant un intervalle de mesure ($T_{mess}$),
   - transmettre le signal de réception radar à une unité d'évaluation (8) et convertir (11) l'au moins un signal de réception radar reçu en valeurs de mesure numériques,
   - effectuer une transformation de Fourier bidimensionnelle (12) à partir d'un spectre en valeur absolu des valeurs de mesure numériques,
   - détecter (13) au moins une réflexion d'une cible (4) sur la base de valeurs de crête dans un spectre en valeur absolue,
   - déterminer (14) au moins une distance (r) d'une cible (4) au dispositif d'émission (2), d'au moins une vitesse radiale $v_r$, et d'au moins une vitesse transversale ($v_q$) d'une cible (4) par rapport au dispositif d'émission (2),
   - déterminer au moins un angle ($\alpha$, 15) de l'au moins une cible (4) par rapport à une orientation du dispositif d'émission (2),

   sur la base de la détermination de la distance (r, 14), de la vitesse radiale relative ($v_r$) et de l'angle ($\alpha$, 15), à l'exception de la réflexion respective d'une cible (4) pour laquelle l'accélération doit être estimée, toutes les autres réflexion de cible et interférences étant supprimés et les accélérations radiales ($a_r$) étant calculées approximative-ment (18) à partir des valeurs de mesure transformées pour cette réflexion d'une cible physique (4) après qu'une transformation de Fourier inverse (17) a été effectuée.

2. Procédé selon la revendication 1, les signaux de réception radar réfléchis étant émis par l'au moins un dispositif d'émission (2) et/ou étant reçus par un dispositif de réception supplémentaire (6).

3. Procédé selon l'une des revendications 1 à 2, la réflexion de cible, pour laquelle l'accélération est à chaque fois estimée, étant séparée par masquage des valeurs de crête de toutes les autres réflexions de cible et tous les autres signaux d'interférence.

**4.** Procédé selon l'une des revendications 1 à 3, la réflexion de cible, pour laquelle l'accélération est à chaque fois estimée, étant approchée par reconstruction ou détermination d'au moins une valeur de crête (13).

**5.** Procédé selon l'une des revendications 1 à 4, l'au moins une distance (r) d'au moins une cible réelle (4) au dispositif d'émission (2) étant déterminée par une mesure du temps de propagation de l'au moins un signal d'émission radar et par au moins une vitesse radiale relative ($v_r$) par rapport à au moins une cible (4).

**6.** Procédé selon l'une des revendications 1 à 5, l'au moins une vitesse transversale relative ($v_q$) d'au moins une cible réelle (4) par rapport au dispositif d'émission (2) étant déterminée par calcul à partir d'au moins deux signaux de réception radar réfléchis.

**7.** Dispositif radar (1) destiné à mettre en œuvre le procédé (10) selon l'une des revendications précédentes, le dispositif radar comprenant au moins un dispositif d'émission (2) destiné à émettre des signaux d'émission radar et au moins un dispositif de réception (6) destiné à recevoir des signaux de réception radar réfléchis et une unité d'évaluation (8) destinée à convertir (11) les signaux de réception radar en valeurs de mesure numériques (x) et à traiter les valeurs de mesure numériques (12, 13, 14, 15, 16, 17, 18) .

**8.** Dispositif radar selon la revendication 7, les valeurs de mesure numériques (x) pouvant en outre être traitées par l'unité d'évaluation (8) de manière matérielle et/ou logicielle.

1

**Fig. 1**

10

**Fig. 2**

**Fig. 3**

**Fig. 4**

**Fig. 5a**

**Fig. 5b**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012220879 A1